# EUROPEAN PATENT SPECIFICATION

(11) **EP 4 521 533 B1**
(45) Date of publication and mention of the grant of the patent: **09.12.2026**
(21) Application number: 25150804.0
(22) Date of filing: 11.09.2019
(51) Int. Cl.: H01M 50/242, B60L 50/64, H01M 10/04, H01M 50/211, H01M 50/238, H01M 50/249

(54) **BATTERY MODULE AND BATTERY PACK COMPRISING BATTERY MODULE**
BATTERIEMODUL UND BATTERIEPACK MIT DEM BATTERIEMODUL
MODULE DE BATTERIE ET BLOC-BATTERIE COMPRENANT LE MODULE DE BATTERIE

(30) Priority: 20.09.2018 KR 20180113243
(43) Date of publication of application: 12.03.2025
(62) Document number(s) of the earlier application(s) in accordance with Art. 76 EPC: 19863210.1 / 3 836 244
(73) Proprietor: LG Energy Solution, Ltd., Seoul 07335 (KR)
(72) Inventor: YOU, Jung-Been, 34122 Daejeon (KR); KANG, Dal-Mo, 34122 Daejeon (KR); KWON, Min-Ho, 34122 Daejeon (KR); MUN, Jeong-O, 34122 Daejeon (KR); RYU, Jae-Uk, 34122 Daejeon (KR); LEE, Jung-Hoon, 34122 Daejeon (KR)
(74) Representative: Plasseraud IP

(56) References cited:
- EP-A1- 3 352 244
- JP-A- 2012 119 232
- KR-A- 20170 050 443
- KR-A- 20180 068 379

## Description

### TECHNICAL FIELD

The present disclosure relates to a battery module and a battery pack including the battery module.

The present application claims priority to Korean Patent Application No. 10-2018-0113243 filed on September 20, 2018 in the Republic of Korea.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module having at least one battery cell first, and then configure a battery pack by using at least one battery module and adding other components.

If conventional battery module or battery pack is used for a long time, the battery cells are inflated to gradually increase the internal pressing force. Accordingly, the battery cells or the cover frame for accommodating the battery cells are damaged.

Thus, it is required to search for a battery module, which may prevent the cover frame or the battery cells from being damaged when the battery cells are inflated, a battery pack including the battery module, and a vehicle including the battery pack.

KR 2018 0068379 describes a battery case,

EP 3 352 244 and KR 2017 0050443 describe a battery module,

JP 5 625834 B2 describes a battery pack.

### DISCLOSURE

### Technical Problem

The present disclosure is directed to providing a battery module, which may prevent a cover frame from being damaged when battery cells are inflated and a battery pack including the battery module.

Moreover, the present disclosure is also directed to providing a battery module, which may prevent battery cells frame from being damaged when the battery cells are inflated and a battery pack including the battery module,

### Technical Solution

**In** one aspect of the present disclosure, there is provided a battery module, comprising: a battery cell assembly having a plurality of battery cells stacked on each other; a pair of end plates provided at both sides of the battery cell assembly; and a cover frame coupled to the pair of end plates to cover the battery cell assembly, the cover frame being deformed along an inflating direction of the plurality of battery cells when the plurality of battery cells are inflated.

The inflating direction of the plurality of battery cells is a direction toward both sides of the battery cell assembly, and the cover frame has an elastic deforming portion that is elastically deformed in the direction toward both sides of the battery cell assembly when the plurality of battery cells are inflated.

The elastic deforming portion is formed with a predetermined length along a longitudinal direction of the battery cell assembly and is provided in plural such that the plurality of elastic deforming portions is spaced apart from each other by a predetermined distance along the direction toward both sides of the battery cell assembly.

The plurality of elastic deforming portions is formed to be convexly protrude out of the cover frame and be concavely formed at an inner side of the cover frame.

When the plurality of battery cells are inflated, the plurality of elastic deforming portions may be elastically deformed to become flat along the direction toward both sides of the cover frame.

In addition, the present disclosure provides a battery pack, comprising: at least one battery module according to the above embodiments; and a pack case configured to package the at least one battery module.

### Advantageous Effects

According to various embodiments as above, it is possible to provide a battery module, which may prevent a cover frame from being damaged when battery cells are inflated, a battery pack including the battery module, and a vehicle including the battery pack.

Moreover, according to various embodiments as above, it is possible to provide a battery module, which may prevent battery cells frame from being damaged when the battery cells are inflated, a battery pack including the battery module, and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is a cross-sectioned view showing the battery module of FIG. 1.
FIG. 3 is a diagram for illustrating the deformation of a cover frame when battery cells of the battery module of FIG. 1 are inflated.
FIG. 4 is a diagram for illustrating a battery module not according to the invention.
FIG. 5 is a diagram for illustrating a cover frame of the battery module of FIG. 4.
FIG. 6 is a diagram for illustrating the deformation of the cover frame when battery cells of the battery module of FIG. 4 are inflated.
FIG. 7 is a diagram for illustrating a battery pack according to an embodiment of the present disclosure.
FIG. 8 is a diagram for illustrating a vehicle according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

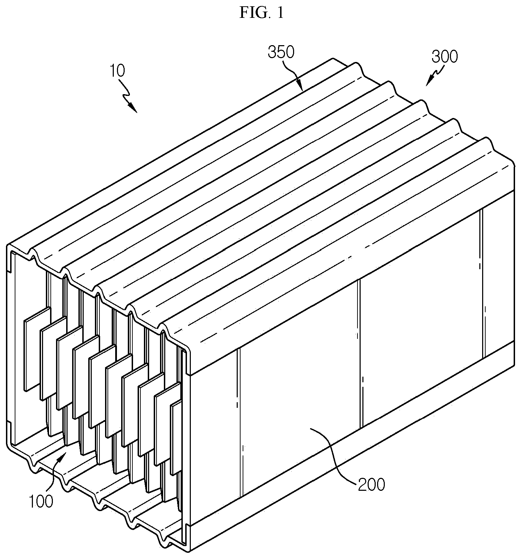

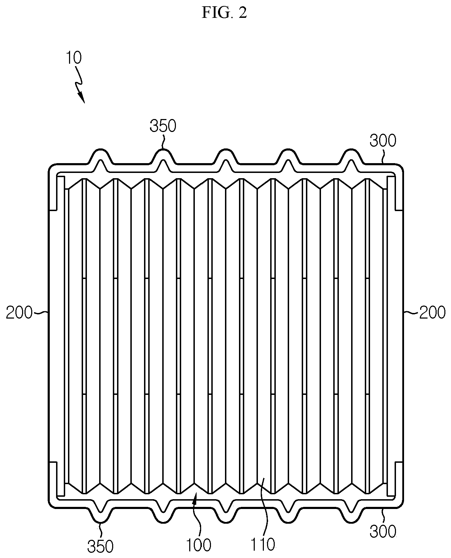

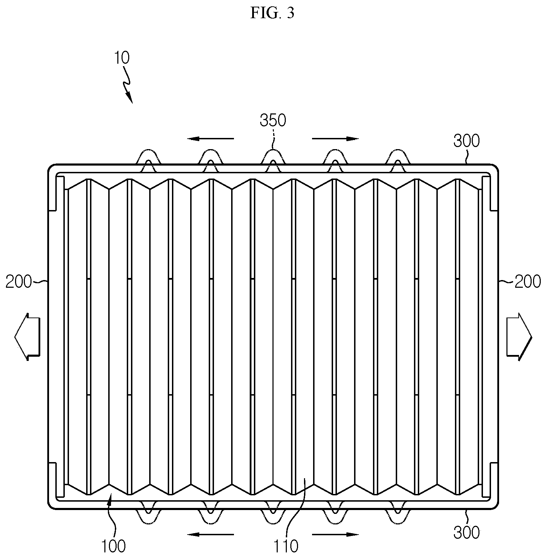

FIG. 1 is a diagram for illustrating a battery module according to an embodiment of the present disclosure, FIG. 2 is a cross-sectioned view showing the battery module of FIG. 1, and FIG. 3 is a diagram for illustrating the deformation of a cover frame when battery cells of the battery module of FIG. 1 are inflated.

Referring to FIGS. 1 to 3, the battery module 10 includes a battery cell assembly 100, an end plate 200, and a cover frame 300.

The battery cell assembly 100 has a plurality of battery cells 110. The plurality of battery cells 110 may be secondary batteries, particularly pouch-type secondary batteries. The battery cells 110 are stacked on each other and may be electrically connected to each other.

The end plate 200 is provided in a pair and is provided at both sides of the battery cell assembly 100. The pair of end plates 200 may support both sides of the battery cell assembly 100.

The cover frame 300 is coupled to the pair of end plates 200 to cover the battery cell assembly 100. The cover frame 300 may covers at least an upper side and a lower side of the pair of end plates 200.

When the plurality of battery cells 110 are inflated, the cover frame 300 is deformed along the inflating direction of the plurality of battery cells 110. Here, the inflating direction of the plurality of battery cells 110 is a direction toward both sides of the battery cell assembly 100, namely toward the pair of end plates 200.

The cover frame 300 has an elastic deforming portion 350 for the elastic deformation.

When the plurality of battery cells 110 are inflated, the elastic deforming portion 350 is elastically deformed in the direction toward both sides of the battery cell assembly 100 to extend the cover frame 300 in the direction toward both sides of the battery cell assembly 100.

The elastic deforming portion 350 is formed with a predetermined length along the longitudinal direction of the battery cell assembly 100, namely in the front and rear directions of the battery module 10, and is provided in plural such that the plurality of elastic deforming portions 350 is spaced apart from each other by a predetermined distance along the direction toward both sides of the battery cell assembly 100.

The plurality of elastic deforming portions 350 is formed to convexly protrude out of the cover frame 300 and may be concavely formed at an inner side of the cover frame 300, respectively.

When the plurality of battery cells 110 are inflated, the plurality of elastic deforming portions 350 are elastically deformed to become flat along the direction toward both sides of the cover frame 300. When the plurality of battery cells 110 are inflated, the plurality of elastic deforming portions 350 are elastically deformed to extend the cover frame 300 to a predetermined length in the inflating direction, thereby guiding deformation of the cover frame 300.

Accordingly, in this embodiment, it is possible to effectively prevent the inner pressing force of the battery module 10 from increasing beyond a predetermined magnitude by means of the elastic deforming portion 350 when the plurality of battery cells 110 are inflated.

Thus, in this embodiment, when the plurality of battery cells 110 are inflated, the elastic deforming portion 350 may prevent the pressing force of the battery module 10 from increasing beyond a predetermined magnitude, thereby significantly reducing the risk of damage of the battery cells 110 or the cover frame 300.

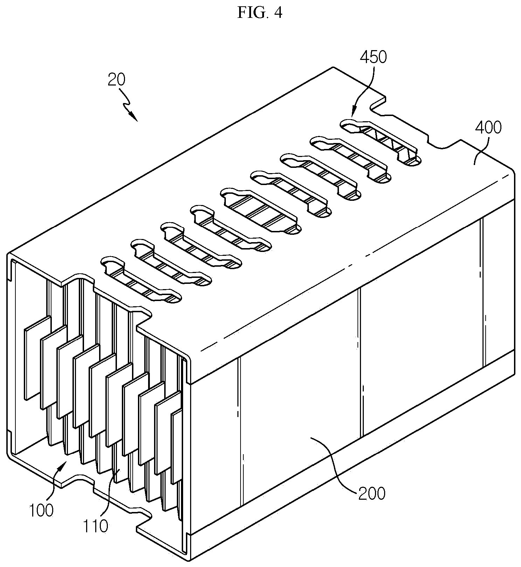

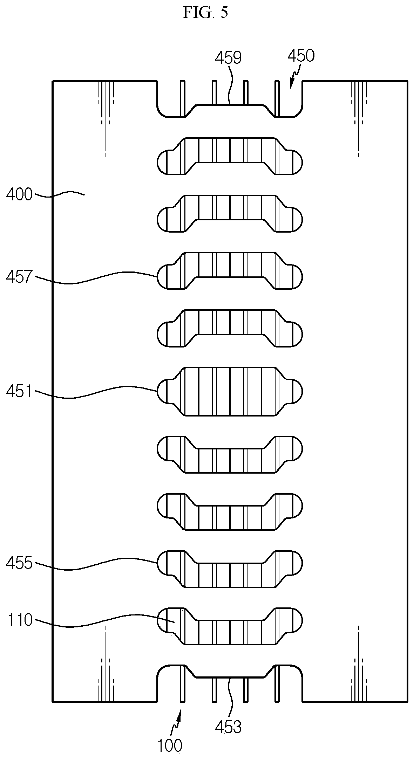

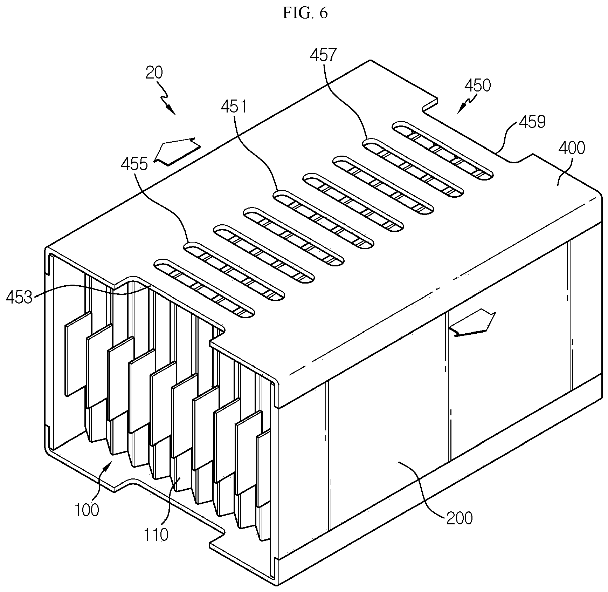

FIG. 4 is a diagram for illustrating a battery module not according to the invention, FIG. 5 is a diagram for illustrating a cover frame of the battery module of FIG. 4, and FIG. 6 is a diagram for illustrating the deformation of the cover frame when battery cells of the battery module of FIG. 4 are inflated.

Since the battery module 20 according to this embodiment is similar to the battery module 10 of the former embodiment, the features identical or similar to those of the former embodiment will not described in detail, and features different from the former embodiment will be described in detail.

Referring to FIGS. 4 to 6, the battery module 20 may include a battery cell assembly 100, an end plate 200 and a cover frame 400.

The battery cell assembly 100 and the end plate 200 are substantially identical or similar to those of the former embodiment and thus will be described in detail.

The cover frame 400 may have an elastic deforming portion 450.

The elastic deforming portion 450 has a groove shape with a predetermined size and may be provided in plural such that the plurality of deforming portions 450 are spaced apart from each other by a predetermined distance along the longitudinal direction of the battery cell assembly 110.

The elastic deforming portion 450 may have a center groove 451, a front edge groove 453, a front groove 455, a rear groove 457, and a rear edge groove 459.

The grooves 451, 453, 455, 455 and 459 are represented as through-holes in FIGS. 4 to 6 for the sole purpose to better visualize the arrangement of the grooves of the cover frame 400 in relation to the other elements of the battery module, in particular the battery cell assembly 100.

The center groove 451 may be formed at the center of the cover frame 400. The center groove 451 may be convexly formed along the front and rear directions of the cover frame 400.

The front edge groove 453 may be spaced apart from the center groove 451 at the front side of the cover frame 400. The front edge groove 453 may be provided at the front edge of the cover frame 400.

The front groove 455 may be provided in plural and disposed between the front edge groove 453 and the center groove 451. The front grooves 455 may be spaced apart from each other by a predetermined distance along the front and rear direction of the cover frame 400 and be formed convex toward a front side of the cover frame 400.

The rear groove 457 is provided in plural, and the plurality of rear grooves 457 are disposed to face the plurality of front grooves 455 with the center groove 451 being interposed therebetween. The rear groove 457 may be formed convex toward a rear side of the cover frame 400.

The rear edge groove 459 may be spaced apart from the plurality of rear grooves 457. The rear edge groove 459 may be provided at a rear edge of the cover frame 400.

When the plurality of battery cells 110 are inflated, the center groove 451, the front edge groove 453, the plurality of front grooves 455, the plurality of rear grooves 457, and the rear edge groove 459 may be elastically deformed to become flat along the direction toward both sides of the cover frame 400.

Accordingly, when the plurality of battery cells 110 are inflated, the elastic deforming portion 450 may extend the cover frame 400 by a predetermined length in the inflating direction to guide deformation of the cover frame 400.

As described above, the elastic deforming portion 450 may be formed with a plurality of straps with a bent groove shape capable of elastically extending the cover frame 400, instead of the shape of the former embodiment.

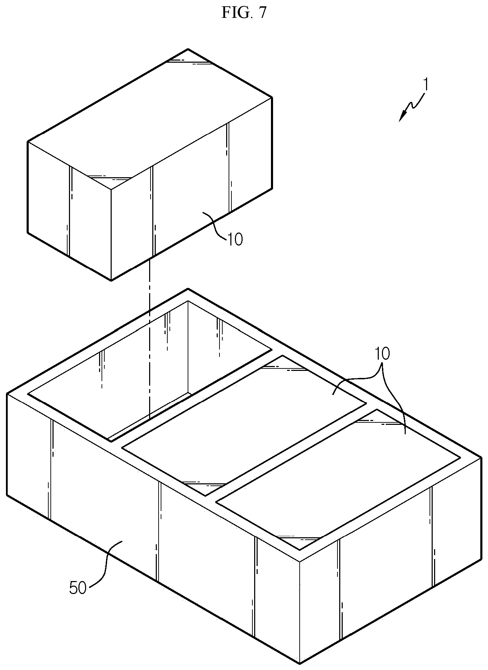

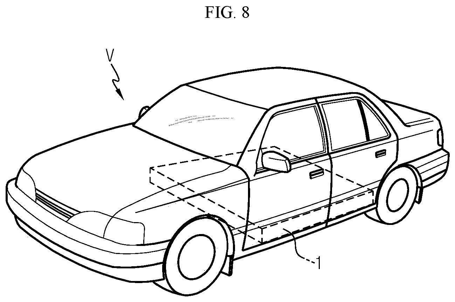

FIG. 7 is a diagram for illustrating a battery pack according to an embodiment of the present disclosure, and FIG. 8 is a diagram for illustrating a vehicle according to an embodiment of the present disclosure.

Referring to FIGS. 7 and 8, a battery pack 1 may include at least one battery module 10 according to the former embodiment and a pack case 50 for packaging the at least one battery module 10.

The battery pack 1 may include at least one battery module 20 of the former embodiments, or may include both the battery modules 10, 20 of the former embodiments.

The battery pack 1 may be provided to a vehicle V as a fuel source of the vehicle V. As an example, the battery pack 1 may be provided to a vehicle V such as an electric vehicle, a hybrid vehicle, and various other-type vehicles capable of using the battery pack 1 as a fuel source.

In addition, the battery pack 1 may be provided in other devices, instruments or facilities such as an energy storage system using a secondary battery, in addition to the vehicle V.

As described above, the battery pack 1 of this embodiment and devices, instruments or facilities such as a vehicle V, which have the battery pack 1, include the battery module 10, 20 as described above, and thus it is possible to implement a battery pack 1 having all the advantages of the battery module 10, 20 described above, or devices, instruments, facilities or the like such as a vehicle V, which have the battery pack 1.

According to various embodiments as above, it is possible to provide the battery module 10, 20, which may prevent the cover frame 300, 400 from being damaged when the battery cells 110 are inflated, the battery pack 1 including the battery module 10, 20, and the vehicle V including the battery pack 1.

Moreover, according to various embodiments as above, it is possible to provide the battery module 10, 20, which may prevent the battery cells 110 frame from being damaged when the battery cells 110 are inflated, the battery pack 1 including the battery module 10, 20, and the vehicle V including the battery pack 1.

While the embodiments of the present disclosure have been shown and described, it should be understood that the present disclosure is not limited to the specific embodiments described, and that various changes and modifications can be made within the scope of the present disclosure by those skilled in the art, and these modifications should not be understood individually from the technical ideas and views of the present disclosure.

The scope of the invention is defined by the appended claims.

## Claims

1. A battery module (10), comprising:
a battery cell assembly (100) having a plurality of battery cells (110) stacked on each other;
a pair of end plates (200) provided at both sides of the battery cell assembly (100); and
a cover frame (300) coupled to the pair of end plates (200) to cover the battery cell assembly (100), the cover frame (300) being deformed along an inflating direction of the plurality of battery cells (110) when the plurality of battery cells (110) are inflated,
wherein the inflating direction of the plurality of battery cells (110) is a direction toward both sides of the battery cell assembly (100), and
wherein the cover frame (300) has an elastic deforming portion (350) that is elastically deformed in the direction toward both sides of the battery cell assembly (100) when the plurality of battery cells (110) are inflated,
wherein the elastic deforming portion (350) is formed with a predetermined length along a longitudinal direction of the battery cell assembly (100) and is provided in plural such that the plurality of elastic deforming portions (350) is spaced apart from each other by a predetermined distance along the direction toward both sides of the battery cell assembly (100), and
wherein the plurality of elastic deforming portions (350) is formed to convexly protrude out of the cover frame (300) and are concavely formed at an inner side of the cover frame (300).

2. The battery module (10) according to claim 1,
wherein when the plurality of battery cells (110) are inflated, the plurality of elastic deforming portions (350) are elastically deformed to become flat along the direction toward both sides of the cover frame (300).

3. A battery pack, comprising:
at least one battery module (10) according to claim 1; and
a pack case configured to package the at least one battery module.

## Patentansprüche

1. Batteriemodul (10), umfassend:
eine Batteriezellanordnung (100) mit einer Vielzahl von übereinander gestapelten Batteriezellen (110);
ein Paar Endplatten (200), die an beiden Seiten der Batteriezellanordnung (100) vorgesehen sind; und
einen Abdeckrahmen (300), der mit dem Paar Endplatten (200) gekoppelt ist, um die Batteriezellanordnung (100) abzudecken, wobei der Abdeckrahmen (300) entlang einer Aufblährichtung der Vielzahl von Batteriezellen (110) verformt wird, wenn die Vielzahl von Batteriezellen (110) aufgebläht wird,
wobei die Aufblährichtung der Vielzahl von Batteriezellen (110) eine Richtung zu beiden Seiten der Batteriezellanordnung (100) hin ist, und
wobei der Abdeckrahmen (300) einen elastischen Verformungsabschnitt (350) aufweist, der in der Richtung zu beiden Seiten der Batteriezellanordnung (100) hin elastisch verformt wird, wenn die Vielzahl von Batteriezellen (110) aufgebläht wird,
wobei der elastische Verformungsabschnitt (350) mit einer vorgegebenen Länge entlang einer Längsrichtung der Batteriezellanordnung (100) ausgebildet ist und mehrfach vorgesehen ist, so dass die Vielzahl von elastischen Verformungsabschnitten (350) um einen vorgegebenen Abstand entlang der Richtung zu beiden Seiten der Batteriezellanordnung (100) hin voneinander beabstandet ist, und
wobei die Vielzahl von elastischen Verformungsabschnitten (350) so ausgebildet ist, dass sie konvex aus dem Abdeckrahmen (300) herausragt und an einer Innenseite des Abdeckrahmens (300) konkav ausgebildet ist.

2. Batteriemodul (10) nach Anspruch 1,
wobei, wenn die Vielzahl von Batteriezellen (110) aufgebläht wird, die Vielzahl von elastischen Verformungsabschnitten (350) elastisch verformt wird, um entlang der Richtung zu beiden Seiten des Abdeckrahmens (300) hin flach zu werden.

3. Batteriepack, umfassend:
mindestens ein Batteriemodul (10) nach Anspruch 1; und
ein Packgehäuse, das dafür konfiguriert ist, das mindestens eine Batteriemodul zu verpacken.

## Revendications

1. Module de batterie (10), comprenant :
un ensemble d'éléments de batterie (100) présentant une pluralité d'éléments de batterie (110) empilés les uns sur les autres ;
une paire de plaques d'extrémité (200) disposées des deux côtés de l'ensemble d'éléments de batterie (100) ; et
un cadre de couvercle (300) couplé à la paire de plaques d'extrémité (200) pour recouvrir l'ensemble d'éléments de batterie (100), le cadre de couvercle (300) étant déformé le long d'une direction de gonflement de la pluralité d'éléments de batterie (110) lorsque la pluralité d'éléments de batterie (110) est gonflée,
dans lequel la direction de gonflement de la pluralité d'éléments de batterie (110) est une direction vers les deux côtés de l'ensemble d'éléments de batterie (100), et
dans lequel le cadre de couvercle (300) comporte une partie de déformation élastique (350) qui est déformée élastiquement dans la direction vers les deux côtés de l'ensemble d'éléments de batterie (100) lorsque la pluralité d'éléments de batterie (110) est gonflée,
dans lequel la partie de déformation élastique (350) est formée avec une longueur prédéterminée le long d'une direction longitudinale de l'ensemble d'éléments de batterie (100) et est prévue en pluralité de sorte que la pluralité de parties de déformation élastique (350) soit espacée les unes des autres d'une distance prédéterminée le long de la direction vers les deux côtés de l'ensemble d'éléments de batterie (100), et
dans lequel la pluralité de parties de déformation élastique (350) est formée pour faire saillie de manière convexe hors du cadre de couvercle (300) et est formée de manière concave au niveau d'un côté intérieur du cadre de couvercle (300).

2. Module de batterie (10) selon la revendication 1,
dans lequel, lorsque la pluralité d'éléments de batterie (110) est gonflée, la pluralité de parties de déformation élastique (350) est déformée élastiquement pour devenir plate le long de la direction vers les deux côtés du cadre de couvercle (300).

3. Bloc-batterie, comprenant :
au moins un module de batterie (10) selon la revendication 1 ; et
un boîtier de bloc-batterie configuré pour emballer l'au moins un module de batterie.
